# EUROPÄISCHE PATENTSCHRIFT

(11) **EP 1 136 676 B1**
(45) Veröffentlichungstag und Bekanntmachung des Hinweises auf die Patenterteilung: **21.04.2004**
(21) Anmeldenummer: 01102655.6
(22) Anmeldetag: 07.02.2001
(51) Int. Cl.: F02B 37/013, F02B 37/18, F02B 37/16

(54) **Brennkraftmaschine mit einer zweistufigen, schaltbaren Abgas-Turbolader-Anordnung**
Engine with a two stage, switchable turbocharging system
Moteur avec un système de turbocompresseur à deux étages commutable

(30) Priorität: 24.03.2000 DE 10014755
(43) Veröffentlichungstag der Anmeldung: 26.09.2001
(73) Patentinhaber: Bayerische Motoren Werke Aktiengesellschaft, 80809 München (DE)
(72) Erfinder: Staub, Peter, 4540 Bad Hall (AT); Barth, Wilfried, 4341 Arbing (AT); Schindler, Erik, 3300 Amstetten (AT)

(56) Entgegenhaltungen:
- US-A- 3 576 102
- US-A- 5 063 744
- PATENT ABSTRACTS OF JAPAN vol. 013, no. 398 (M-866), 5. September 1989 (1989-09-05) & JP 01 142214 A (KANESAKA GIJUTSU KENKYUSHO:KK), 5. Juni 1989 (1989-06-05)
- PATENT ABSTRACTS OF JAPAN vol. 012, no. 212 (M-710), 17. Juni 1988 (1988-06-17) & JP 63 016131 A (NISSAN MOTOR CO LTD), 23. Januar 1988 (1988-01-23)

## Beschreibung

Die Erfindung bezieht sich nach dem Oberbegriff des Patentanspruches 1 auf eine Brennkraftmaschine mit einer zweistufigen, schaltbaren Abgas-Turbolader-Anordnung, umfassend einen Hochdrucklader mit einer mit einem Abgas-Sammler der Brennkraftmaschine verbundenen Turbine, mit der eine Turbine eines Niederdruckladers in Reihe angeordnet ist, wobei jeder Turbine jeweils ein steuerbarer Bypass zugeordnet ist und ein Verdichter des Hochdruckladers einen steuerbaren Ladeluft-Bypass umfasst, ferner die Bypass-Steuerungen ggf. mittels eines elektronischen Steuergerätes gesteuert/geregelt sind, wobei bei aktiviertem Bypass der Hochdruck-Turbine der wesentliche Abgasstrom der Niederdruck-Turbine zugeführt ist.

Eine derartige Anordnung ist beispielsweise aus der DE 39 33 518 C2 und aus der US 5,063,744 bekannt.

Der Erfindung liegt die Aufgabe zugrunde, für die gattungsgemäße Abgas-Turbolader-Anordnung zumindest eine kompakte Baueinheit abgasführender Teile und Leitungen aufzuzeigen.

Diese Aufgabe ist mit dem Patentanspruch 1 dadurch gelöst, dass der Abgas-Sammler über einen in einem Sammler-Endbereich angeordneten ersten Auslass mit der Hochdruck-Turbine und über einen im Mittenbereich angeordneten zweiten Auslass mit der Niederdruck-Turbine abgasführend verbunden ist, und eine zwischen der Hochdruck-Turbine und der Niederdruck-Turbine vorgesehene Verbindungsleitung vom zweiten Sammler-Auslass gesondert das Abgas der Niederdruck-Turbine zuführt, wobei ein dem zweiten Sammler-Auslass zugeordneter, steuerbarer Kanal als Bypass der Hochdruck-Turbine dient und der Abgas-Sammler und das Hochdruck-Turbinengehäuse sowie die Verbindungsleitung ein einstückiges Gussteil bilden, wobei die Verbindungsleitung in einen dem zweiten Sammler-Auslass zugeordneten Anschlussflansch für das Niederdruck-Turbinengehäuse mündet, und zwar benachbart dem klappengesteuerten Sammler-Auslasskanal stromauf der Anschlussfläche des Anschlussflansches.

Mit der Erfindung ist in vorteilhafter Weise eine kompakte Baueinheit abgasführender Teile und Leitungen erzielt.

Mit dem Kemgedanken der Erfindung, dem zweiten Abgas-Sammler-Auslass einen steuerbaren Kanal zuzuordnen, der als Bypass der Hochdruck-Turbine dient, lässt sich eine hoch integrierte, platzsparende Baueinheit erzielen.

Bei der Ausführung ist eine strömungsgünstige Anbindung der Niederdruck-Turbine an den Abgas-Sammler durch eine tangentiale Einströmung des Abgases ohne zusätzliche Umlenkung. Weiter vorteilhaft ist die Integration eines als "Wastegate-Klappe" gestalteten Steuerorgans für den Hochdruck-Turbinen-Bypass-Kanal, wobei diese Klappe vorteilhafterweise stromauf des Anschlussflansches für das Niederdruck-Turbinengehäuse dem Bypass-Kanal zugeordnet werden kann. Ein weiterer Vorteil ist die Einbindung des Abgasstromes von der Hochdruck-Turbine in eine gemeinsame Flanschverbindung bzw. gemeinsamen Anschlussflansch der Niederdruck-Turbine mit dem Abgas-Sammler mit einer bevorzugten parallelen Abgasführung im Bereich der Einmündungsstelle. Weiter bietet die Ausgestaltung der Erfindung eine volle Integration der Verbindungsleitung zwischen Hochdruck-Turbine und Niederdruck-Turbine in den Abgas-Sammler für die kompakte, einstückige Bauausführung. Schließlich können in den Verbindungsleitungen auch Kompensatoren zur Reduzierung von Wärmespannungen vorgesehen sein.

Mit den erfindungsgemäß vorteilhaft motomah im geringen gegenseitigen Abstand angeordneten Turbinen des Hochdruckladers und des Niederdruckladers ergibt sich für die mit den vorgenannten Turbinen jeweils verbundenen Lader eine kompakte Einheit, die vorteilhafterweise mittels flexiblen Leitungen entsprechend der Reihenschaltung miteinander zu verbinden sind, wobei mit den flexiblen Leitungen auf den im Fahrzeug vorhandenen Bauraum bestmöglich eingegangen werden kann. Mit dieser vorbeschriebenen Anordnung ist auch der dem Hochdrucklader zugeordnete Ladeluft-Bypass aus einer flexiblen Leitung den Platzverhältnissen bestmöglich angepasst anzuordnen.

Die Erfindung ist anhand von in der Zeichnung dargestellten Ausführungsbeispielen beschrieben. Es zeigt
- Figur 1: in schematischer Darstellung eine zweistufige, schaltbare Abgas-Turbolader-Anordnung,
- Figur 2: ein erstes Ausführungsbeispiel der Erfindung in integrierter Anordnung der Abgas-Turbolader am Abgas-Sammler,
- Figur 3: eine Draufsicht des Ausführungsbeispiels nach Figur 2, teilweise geschnitten,
- Figur 4: die Einmündung der beiden Abgaskanäle in die Niederdruck-Turbine mit Steuerklappe für den Hochdruck-Bypass,
- Figur 5: eine perspektivische Darstellung des zweiten Ausführungsbeispiels der Erfindung mit einer am Abgas-Sammler angeordneten Anschlusseinrichtung für eine gesondert angeordnete Hochdruck-Turbine.

Eine Brennkraftmaschine 1 mit einer zweistufigen, schaltbaren Abgas-Turbolader-Anordnung 2 umfasst einen motomahen Hochdrucklader 3 mit einer mit einem Abgas-Sammler 4 der Brennkraftmaschine 1 abgasführend verbundenen Turbine 5, mit der eine Turbine 6 eines Niederdruckladers 7 in Reihe angeordnet ist. Jeder Turbine 5, 6 ist jeweils ein steuerbarer Bypass 8, 9 zugeordnet, wobei der Bypass 9 in bekannter Weise mit einem Wastgate-Ventil ausgebildet ist. Ein Verdichter 10 des Hochdruckladers 3 umfasst einen steuerbaren Ladeluft-Bypass 11. Die Steuerung sämtlicher Bypässe 8, 9 und 11 erfolgt mittels eines elektronischen Steuergerätes 12. Weiter ist es aus dem Stand der Technik bekannt, dass bei aktiviertem Bypass 8 zur Umgehung der Hochdruck-Turbine 5 der wesentliche Abgasstrom der Niederdruck-Turbine 6 zugeführt ist und ein kleinerer Abgasanteil der Brennkraftmaschine weiterhin über die Hochdruck-Turbine 5 geführt ist beispielsweise aus schmierungstechnischen Überlegungen einerseits und um das Ansprechverhalten der Abgas-Turbolader-Anordnung 2 andererseits günstig zu gestalten.

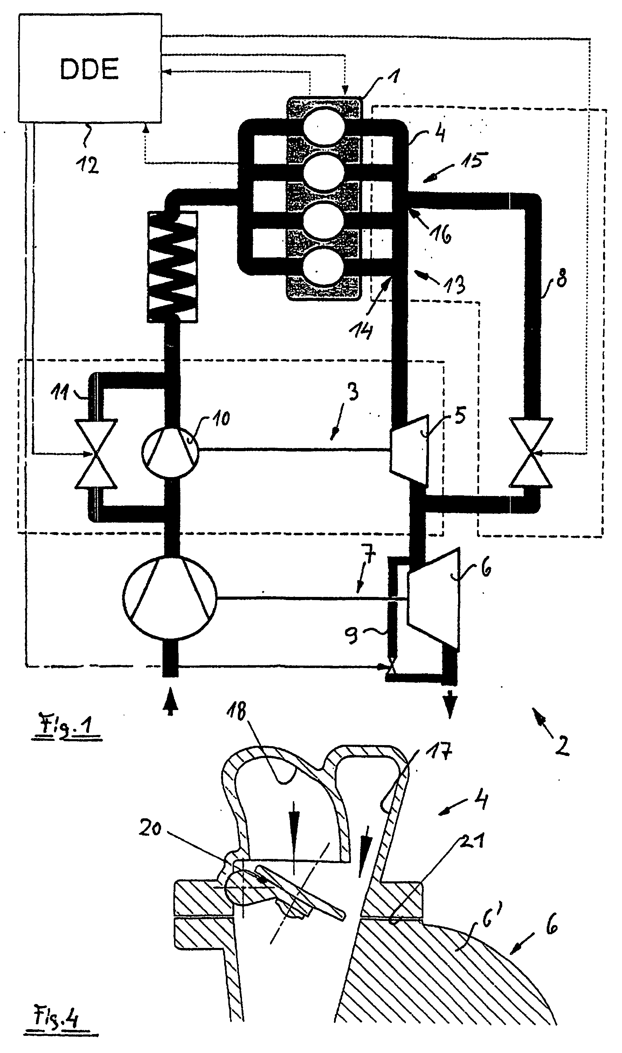

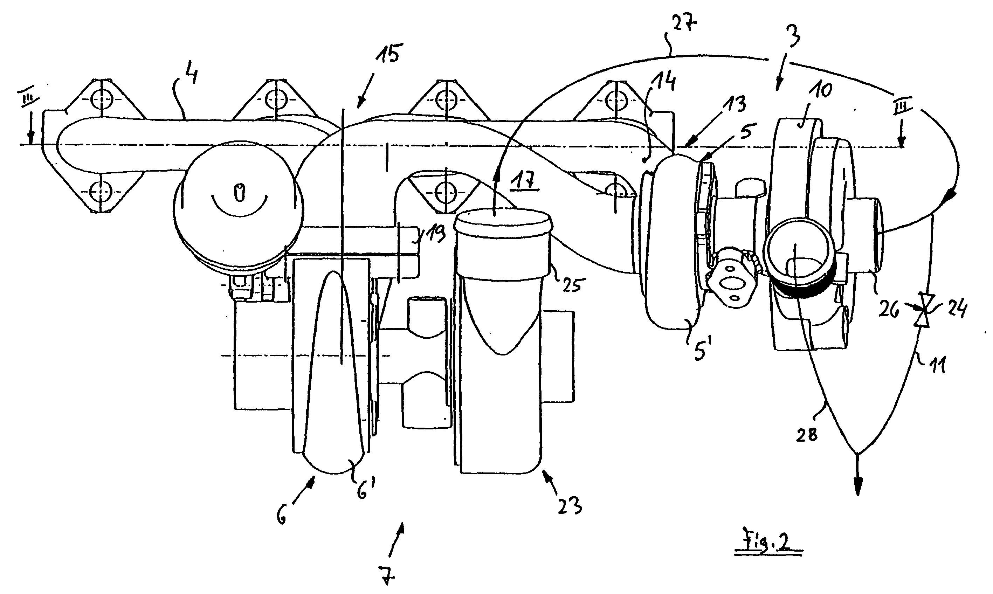

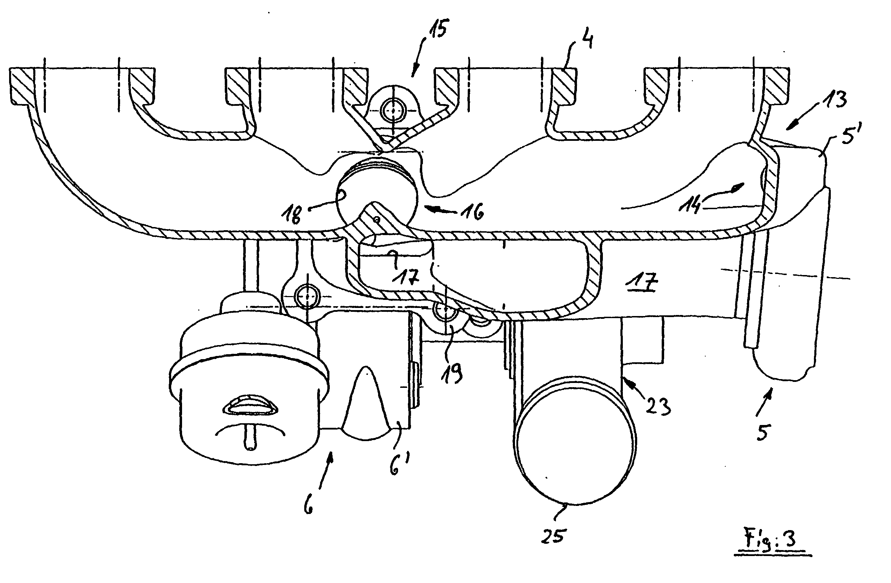

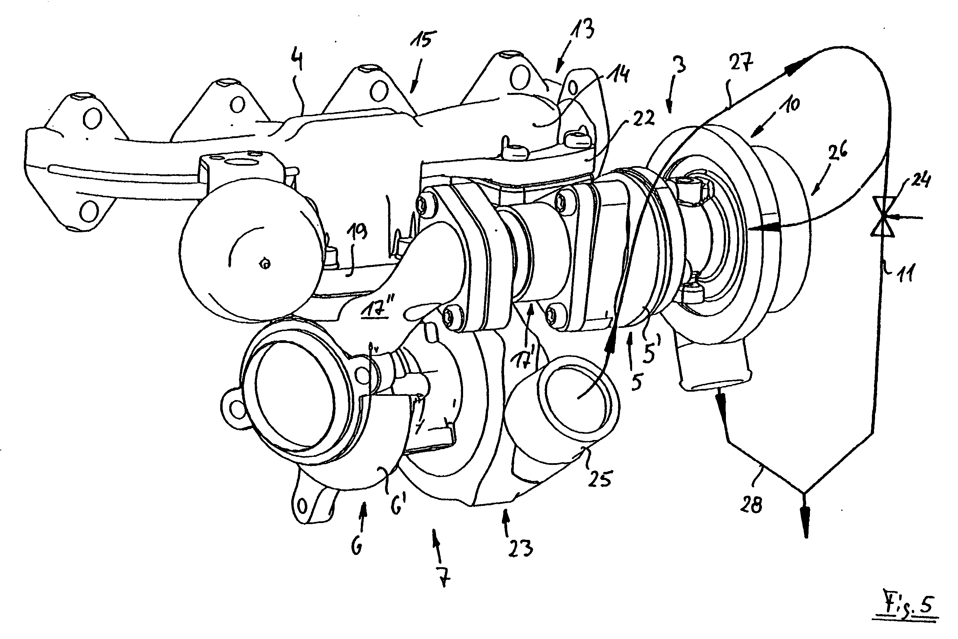

Zur Erzielung einer erfindungsgemäßen kompakten Baueinheit insbesondere der abgasführenden Teile und Leitungen der Abgas-Turbolader-Anordnung 2 wird vorgeschlagen, dass der Abgas-Sammler 4 über einen in einem Sammler-Endbereich 13 angeordneten ersten Auslass 14 mit der Hochdruck-Turbine 5 und über einen im Mittenbereich 15 angeordneten zweiten Auslass 16 mit der Niederdruck-Turbine 6 abgasführend verbunden ist, und eine zwischen der Hochdruck-Turbine 5 und der Niederdruck-Turbine 6 vorgesehene Verbindungsleitung 17 vom zweiten Sammler-Auslass 16 gesondert das Abgas der Niederdruck-Turbine 6 zuführt, wobei ein dem zweiten Sammler-Auslass 16 zugeordneter, steuerbarer Kanal 18 als Bypass der Hochdruck-Turbine 5 exemplarisch für das erste Ausführungsbeispiel der Erfindung gemäß den Figuren 3 und 4 dargestellt ist.

In einer ersten, hoch integrierten Abgas-Turbolader-Anordnung 2 bilden erfindungsgemäß der Abgas-Sammler 4 und das Hochdruck-Turbinengehäuse 5' sowie die Verbindungsleitung 17 ein einstückiges Gussteil, wobei die Verbindungsleitung 17 in einem dem zweiten Sammler-Auslass 16 zugeordneten Anschlussflansch 19 für das Niederdruck-Turbinengehäuse 6' mündet und zwar benachbart dem mittels einer Klappe 20 gesteuerten Sammler-Auslass-Kanal 18 stromauf der Anschlussfläche 21 des Anschlussflansches 19. Stromauf der Steuerklappe 20 ist ein üblicher, steuerbarer Wastgaste-Bypass 9 am Sammler-Auslass-Kanal 18 angeschlossen (nicht gezeigt).

Mit dem im Mittenbereich 15 des Abgas-Sammlers 4 angeordneten und steuerbar ausgebildeten Sammler-Auslass-Kanal 18 ist in baulich vorteilhafter Weise der zur Umgehung der Hochdruck-Turbine 5 in Figur 1 schematisch dargestellte Bypass 8 verwirklicht mit dem Vorteil einer hoch integrierten, als einstückiges Gussteil ausgebildeten Anordnung 2 bezüglich deren abgasführenden Teilen und Leitungen. Bei einer zweiten, als Montageeinheit gestalteten erfindungsgemäßen Anordnung 2 weist der Abgas-Sammler 4 eine dem ersten Sammler-Auslass 14 zugeordnete, flanschartige Anschlusseinrichtung 22 für eine gesondert angeordnete Hochdruck-Turbine 5 auf. Die am Abgas-Sammler 4 demnach montierbar angeordnete Hochdruck-Turbine 5 steht mit der im Mittenbereich 15 des Abgas-Sammlers 4 über den Anschlussflansch 19 montierten Niederdruck-Turbine 6 über eine Verbindungsleitung 17' aus kuppelbaren Leitungsabschnitten abgasführend in Verbindung. Zur Reduzierung der Anzahl gesonderter Leitungsteile ist ein der Niederdruck-Turbine 6 zugeordneter Leitungsabschnitt 17" einstückig mit dem Niederdruck-Turbinengehäuse 6' verbunden.

Jede der Verbindungsleitungen 17 und 17' kann zum Ausgleich höherer Temperaturdehnungen jeweils mit einem nicht gezeigten Kompensator ausgerüstet sein.

Die mit der Erfindung in vorteilhafter Weise erzielbare kompakte Anordnung der beiden Turbinen 5 und 6 am jeweiligen Abgas-Sammler 4 ergibt in vorteilhafter Weise auch für die Verdichter 23 und 10 des Niederdruckladers 7 und des Hochdruckladers 3 eine vorteilhaft kompakte Unterbringungen, so dass ein Abströmstutzen 25 des Verdichters 23 des Niederdruckladers 7 mit einem Einströmstutzen 26 des Verdichters 10 des Hochdruckladers 3 über eine flexible Ladeluftleitung 27 verbindbar ist. Stromauf des Anschlusses der Ladeluftleitung 27 an den Verdichter 10 des Hochdruckladers 3 zweigt von dieser ein Ladeluft-Bypass 11 ab, der stromab eines Steuerventils 24 mit einer weiteren Ladeluftleitung 28 zwischen dem Hochdrucklader 3 und der Brennkraftmaschine 1 verbunden ist.

Mit der erfindungsgemäßen, zweistufigen, schaltbaren Abgas-Turbolader-Anordnung 2 sind als weitere Vorteile zu nennen:
Reduktion von Größe und Anzahl der abgasseitigen Dichtstellen, speziell durch Integration der Steuerklappe in den Abgas-Sammler, was zu Funktions-, Gewichts- und Kostenvorteilen führt;
verlustarme Zusammenführung der Abgasströme vor der Niederdruck-Turbine kombiniert mit einer optimalen Anströmung der Turbine ist die Basis für ein hohes Nennleistungspotenzial;
keine Energieverluste durch zusätzliche Abdichtung der Steuerklappenwelle;
strömungs- und schwingungsgünstige motomahe Anordnung sowohl der Niederdruckstufe als auch der Hochdruckstufe;
schließlich günstige Anordnung der beiden Turbolader bezüglich Bauteilfestigkeit und geringer Bauteilverzüge.

## Patentansprüche

1. Brennkraftmaschine mit einer zweistufigen, schaltbaren Abgas-Turbolader-Anordnung,
- umfassend einen Hochdrucklader (3) mit einer mit einem Abgas-Sammler (4) der Brennkraftmaschine (1) verbundenen Turbine (5), mit
- der eine Turbine (6) eines Niederdruckladers (7) in Reihe angeordnet ist, wobei
- jeder Turbine (5, 6) jeweils ein steuerbarer Bypass (8, 9) zugeordnet ist und
- ein Verdichter (10) des Hochdruckladers (3) einen steuerbaren Ladeluft-Bypass (11) umfasst, ferner
- die Bypass-Steuerungen ggf. mittels eines elektronischen Steuergerätes (12) gesteuert/geregelt sind, wobei
- bei aktiviertem Bypass (8) der Hochdruck-Turbine (5) der wesentliche Abgasstrom der Niederdruck-Turbine (6) zugeführt ist,
**dadurch gekennzeichnet,**
- **dass** der Abgas-Sammler (4) über einen in einem Sammler-End-bereich (13) angeordneten ersten Sammler-Auslass (14) mit der Hochdruck-Turbine (5) und
- über einen im Mittenbereich (15) angeordneten zweiten Sammler-Aulass (16) mit der Niederdruck-Turbine (6) abgasführend verbunden ist, und
- eine zwischen der Hochdruck-Turbine (5) und der Niederdruck-Turbine (6) vorgesehene Verbindungsleitung (17, 17') vom zweiten Sammler-Auslass (16) gesondert das Abgas der Niederdruck-Turbine (6) zuführt, wobei ein
- dem zweiten Sammler-Auslass (16) zugeordneter, steuerbarer Kanal (18) als Bypass der Hochdruck-Turbine (5) dient und
- **dass** der Abgas-Sammler (4) und das Hochdruck-Turbinengehäuse (5') sowie die Verbindungsleitung (17) ein einstückiges Gussteil bilden, wobei
- die Verbindungsleitung (17) in einen dem zweiten Sammler-Auslass (16) zugeordneten Anschlussflansch (19) für das Niederdruck-Turbinengehäuse (6') mündet, und
- zwar benachbart dem klappengesteuerten Sammler-Auslass-Kanal (18) stromauf der Anschlussfläche (21) des Anschlussflansches (19).

2. Brennkraftmaschine nach Anspruch 1, **dadurch gekennzeichnet,**
**dass** an den Sammler-Auslass-Kanal (18) stromauf der Steuerklappe (20) ein steuerbarer Wastegate-Bypass (9) angeschlossen ist.

3. Brennkraftmaschine nach Anspruch 1, **dadurch gekennzeichnet,**
- **dass** ein Abströmstutzen (25) eines Verdichters (23) des Niederdruckladers (7) mit einem Einströmstutzen (26) eines Verdichters (10) des Hochdruckladers (3) über eine flexible Ladeluftleitung (27) verbunden ist, wobei
- diese Leitung (27) stromauf des Hochdruckladers (3) mit dem Ladeluft-Bypass (11) in Verbindung steht, der
- stromab eines Steuerventils (24) mit einer weiteren Ladeluftleitung (28) zwischen dem Hochdrucklader (3) und der Brennkraftmaschine (1) verbunden ist.

## Claims

1. An internal combustion engine with a two-stage switchable exhaust-gas supercharger arrangement,
- comprising a high-pressure blower (3) with a turbine (5) connected to an exhaust manifold (4) of the engine (1) and
- disposed in series with a turbine (6) of a low-pressure blower (7), wherein
- each turbine (5, 6) is associated with a controllable bypass (8, 9) and
- a compressor (10) of the high-pressure blower (3) comprises a controllable air charge bypass (11),
- the bypass controls, when required, are operated in an open or closed loop by an electronic control unit(12), and
- when the bypass (8) of the high-pressure turbine (5) is activated, the exhaust gas is supplied mainly to the low-pressure turbine (6),
**characterised in that**
- the exhaust manifold (4) is connected and conveys gas to the high-pressure turbine (5) via a first outlet manifold (14) disposed in an end region (13) of the manifold and
- is connected and supplies gas to the low-pressure turbine (6) via a second outlet manifold (16) disposed in the central region (15), and
- a connecting line (17, 17') between the high-pressure turbine (5) and the low-pressure turbine (6) supplies the exhaust gas to the low-pressure turbine (6) separately from the second outlet manifold (16), wherein
- a controllable duct (18) associated with the second outlet manifold (16) bypasses the high-pressure turbine (5) and
- the exhaust manifold (4), the high-pressure turbine casing (5') and the connecting line (17) are in the form of a one-piece casting, wherein
- the connecting line (17) opens into a connecting flange (19) for the low-pressure turbine casing (6') associated with the second outlet manifold (16),
- near the valve-controlled outlet manifold duct (18) upstream of the connecting surface (21) of the flange (19).

2. An engine according to claim 1, **characterised in that** a controllable wastegate bypass (9) is connected to the outlet duct (18) upstream of the control valve (20).

3. An engine according to claim 1, **characterised in that** an outflow nozzle (25) of a compressor (23) on the low-pressure blower (7) is connected to an inlet nozzle (26) of a compressor (10) on the high-pressure blower (3) via a flexible air charge pipe (27), wherein
- the pipe (27) is connected to the air charge bypass (11) upstream of the high-pressure blower (3) and
- this is connected downstream of a control valve (24) to an additional air charge line (28) between the high-pressure blower (3) and the engine (1).

## Revendications

1. Moteur à combustion interne comportant un système de turbocompresseur à gaz d'échappement réglable à deux étages comprenant :
- un turbocompresseur à haute pression (3) muni d'une turbine (5) liée à un collecteur des gaz d'échappement (4) du moteur à combustion interne (1)
- une turbine (6) d'un turbocompresseur à basse pression (7) montée en série,
- une dérivation (8, 9) réglable respectivement associée à chaque turbine (5, 6)
- un compresseur (10) du turbocompresseur à haute pression (3) comprenant de plus une dérivation d'air de suralimentation (11) réglable,
- les commandes de dérivation éventuellement commandées/réglées à l'aide d'un dispositif de commande électronique et
- l'acheminement de flux la majeure partie de gaz d'échappement à la turbine à basse pression (6) lorsque la dérivation (8) de la turbine à haute pression (5) est activée,
**caractérisé en ce que**
- le collecteur des gaz d'échappement (4) est relié - d'une façon qui conduit les gaz d'échappement - à la turbine à haute pression (5) par l'intermédiaire d'une première sortie du collecteur (14) disposée dans une zone terminale du collecteur (13) et
- à la turbine à basse pression (6) par l'intermédiaire d'une deuxième sortie du collecteur (16) disposée dans la zone médiane (15) et
- une conduite de liaison (17, 17') prévue entre la turbine à haute pression (5) et la turbine à basse pression (6) conduit le gaz d'échappement de la turbine à basse pression (6) séparément de la deuxième sortie du collecteur (16),
- un canal (18) réglable associé à la deuxième sortie du collecteur (16) servant de dérivation à la turbine à haute pression (5) et
- le collecteur des gaz d'échappement (4) et le boîtier de turbine à haute pression (5') ainsi que la conduite de liaison (17) formant une seule pièce en fonte,
- la conduite de liaison (17) débouchant dans une bride de raccordement (19) - associée à la deuxième sortie du collecteur (16) - pour le boîtier de turbine à basse pression (6'),
- au voisinage du canal du sortie du collecteur (18) commandé par clapet, en amont de la surface de raccordement (21) de la bride de raccordement (19).

2. Moteur à combustion interne selon la revendication 1,
**caractérisé en ce que**
sur le canal de sortie du collecteur (18) une dérivation de soupape de décharge (9) réglable est raccordée en amont du clapet de commande (20).

3. Moteur à combustion interne selon la revendication 1,
**caractérisé en ce qu'**
- un manchon de sortie (25) d'un compresseur (23) du turbocompresseur à basse pression (7) est relié à un manchon d'entrée (26) du compresseur (10) du turbocompresseur à haute pression (3) par l'intermédiaire d'une conduite d'air de suralimentation (27) flexible,
- en amont du turbocompresseur à haute pression 3 cette conduite (27) étant en liaison avec la dérivation d'air de suralimentation (11)
- qui en aval d'une soupape de commande (24) est reliée à une autre conduite d'air de suralimentation (28) entre le turbocompresseur à haute pression (3) et le moteur à combustion interne (1).
